(19) Europäisches Patentamt

European Patent Office

Office européen des brevets

(11) **EP 0 694 193 B1**

(12) **FASCICULE DE BREVET EUROPEEN**

(45) Date de publication et mention
de la délivrance du brevet:
**31.05.2000 Bulletin 2000/22**

(51) Int. Cl.⁷: **G06T 5/00**

(86) Numéro de dépôt international:
**PCT/IB95/00076**

(21) Numéro de dépôt: **95906457.7**

(22) Date de dépôt: **03.02.1995**

(87) Numéro de publication internationale:
**WO 95/22806 (24.08.1995 Gazette 1995/36)**

(54) **DISPOSITIF DE SEGMENTATION D'UN ENSEMBLE DISCRET DE DONNEES**

ANORDNUNG ZUR SEGMENTIERUNG EINES DISKRETEN DATENSATZES

DEVICE FOR THE SEGMENTATION OF A DISCRETE SET OF DATA

(84) Etats contractants désignés:
**DE FR GB**

(30) Priorité: **16.02.1994 FR 9401769**
**07.12.1994 FR 9414726**

(43) Date de publication de la demande:
**31.01.1996 Bulletin 1996/05**

(73) Titulaire:
**Koninklijke Philips Electronics N.V.**
**5621 BA Eindhoven (NL)**

(72) Inventeurs:
• **FASSNACHT, Carola**
**F-75008 Paris (FR)**
• **DEVIJVER, Pierre**
**F-75008 Paris (FR)**

(74) Mandataire:
**Landousy, Christian et al**
**Société Civile S.P.I.D.**
**156, Boulevard Haussmann**
**75008 Paris (FR)**

(56) Documents cités:
**US-A- 4 764 971**

• **FOURTH CONFERENCE ON ARTIFICIAL INTELLIGENCE FOR SPACE APPLICATIONS (NASA CONF. PUBL. 3013), 15 Novembre 1988, HUNTSVILLE, AL, USA pages 221 - 229 LODA A G & RANGANATH H S 'A Hardware Implementation of a Relaxation Algorithm to Segment Images'**
• **PROCEEDINGS OF THE 1979 IEEE COMPUTER SOCIETY CONFERENCE ON PATTERN RECOGNITION AND IMAGE PROCESSING, 6 Août 1979, CHICAGO, IL, USA pages 515 - 522 NAGIN P ET AL 'Segmentation, Evaluation and Natural Scenes.'**
• **ICASSP 88, INTERNATIONAL CONFERENCE ON ACCOUSTICS, SPEECH AND SIGNAL PROCESSING, vol.M-II, 11 Avril 1988, NEW YORK CITY, USA pages 882 - 885 P W FUNG ET AL. 'Automatic Segmentation of Biomedical Images.'**
• **EUROGRAPHICS '91, EUROPEAN COMPUTER CONFERENCE AND EXHIBITION., 2 Septembre 1991, VIENNA, AUSTRIA pages 399 - 412 M POPOVIC ET AL. 'Several Approaches to Implement the Merging Step of the Split and Merge Region Segmentation.'**

**Description**

La présente invention concerne un dispositif de segmentation d'un ensemble discret de données correspondant à des sites (m,n) avec m compris entre 1 et M inclus et n entre 1 et N inclus, à partir de signaux numériques d'entrée correspondant auxdites données. Cette invention trouve des applications en particulier dans le domaine de la segmentation d'images, pour réaliser par exemple des transmissions de type vidéophonique, ou pour des traitements tels que celui d'images fournies par des satellites ou celui d'images obtenues dans le domaine médical ou en vision robotique, et concerne alors toutes sortes d'images, classiques ou bien à indication de distance (entre le capteur de prise de vue et l'objet de la scène le plus proche), et aussi bien des images à distribution de niveaux de gris que des images texturées ou des images associant plusieurs types de structure d'image.

Tout procédé de segmentation d'image a pour objet une classification, c'est-à-dire un regroupement des éléments d'image (ou pixels) en leur affectant une étiquette commune (ou label) par région issue de la segmentation. Une telle opération revient en quelque sorte à construire à partir de données observables une modélisation facilitant des traitements ultérieurs. Cependant, plutôt que de construire un modèle déterministe, on préfère chercher alors à évaluer des probabilités attachées aux situations qui sont le reflet de ces données observables, avec une vraisemblance qui est la marque du degré de confiance en cette interprétation particulière. Dans l'établissement d'un tel modèle non déterministe, on ne peut pas exclure que, dans la classification recherchée, chaque pixel soit influencé par la classe d'appartenance de ses voisins. A partir de cette hypothèse, on a songé alors à considérer l'ensemble des pixels d'une image comme un champ de Markov (c'est-à-dire comme la généralisation d'une chaîne de Markov).

La communication "Segmentation of textured images using a multiresolution approach", effectuée par C. Bouman et B. Liu lors de la "1988 International Conference on Acoustics, Speech and Signal Processing" (tenue à New-York, USA, du 11 au 14 avril 1988) et publiée dans les "Compte-Rendus" de cette conférence, volume n°2, pp.1124-1127, présente une méthode de segmentation d'images qui repose sur une estimation approchée du maximum a posteriori d'un champ de Markov aléatoire, à partir de l'hypothèse qu'une distribution a priori des labels affectés aux pixels est donnée par une distribution de Gibbs. Cette méthode procède par des segmentations de plus en plus précises, le processus de segmentation avec résolution d'image croissante étant interrompu lorsque chaque pixel a pu être affecté à une classe.

Le but de l'invention est de proposer un dispositif de segmentation de données, et notamment de signaux numériques correspondant à des images, qui met en oeuvre une méthode de segmentation faisant également appel à une modélisation par un champ de Markov, mais reposant sur une approche différente et conduisant à un résultat optimal en très peu d'itérations.

A cet effet, l'invention concerne un dispositif de segmentation plus particulièrement caractérisé en ce qu'il comprend en série :

(A) un sous-ensemble de segmentation initiale par extraction d'histogramme, calcul de moyennes sur T classes, et classification par recherche, pour chaque signal numérique d'entrée, de celle des moyennes qui est la plus proche du niveau dudit signal ;

(B) un sous-ensemble de détermination et mise à jour de probabilités, recevant d'une part les labels déterminés par ledit sous-ensemble de segmentation initiale et d'autre part lesdits signaux numériques d'entrée et comprenant lui-même :

(1) en sortie dudit sous-ensemble de segmentation initiale, une première voie de détermination de probabilités conditionnelles p(q/a,b,c), comprenant elle-même en série :

(a) un circuit de détermination de probabilités dites de configuration traduisant l'identité ou la non-identité des niveaux correspondant à chacune des quinze configurations possibles à l'intérieur d'un modèle bidimensionnel en carré (q,a,b,c) de chaîne de Markov, q étant appelé dans ledit ensemble à segmenter le label à déterminer au site dit "enfant" et a,b,c les labels des sites dits "parents" ;
(b) un circuit de calcul de coefficients de propagation pour le modèle de chaîne de Markov ainsi choisi ;
(c) un premier circuit de détermination de la probabilité conditionnelle $p(q/abc) = \exp L(q/abc)/Z(abc)$, où Z est un facteur de normalisation et où $L(q/abc)$ est un opérateur dit de propagation de l'influence des parents aux enfants, défini par les expressions (3) à (14) :

$$L(q/abc) = B(v) . d(qa) + B(d) . d(qb). + B(h) . d(qc) + B(v,d) . d(qab) + B(d,h) . d(qbc) + B(v,h) . d(qac) + B(v,d,h) . d(qabc) \tag{3}$$

$$\exp B(v) = k.S(1123) \tag{4}$$

$$\exp B(d) = k.S(1213) \tag{5}$$

$$\exp B(h) = k.S(1231) \tag{6}$$

$$\exp B(v,d) = c(v,d).(\exp.B(h) + T\text{-}2).\exp (B(v) + B(d)) \tag{7}$$

$$\exp B(v,h) = c(v,h).(\exp.B(d) + T\text{-}2).\exp (B(v) + B(h)) \tag{8}$$

$$\exp B(d,h) = c(d,h).(\exp B(v) + T\text{-}2).\exp (B(d) + B(h)) \tag{9}$$

$$\exp B(v,d,h) = \frac{(T\text{-}1).S(1111)/S(1222)}{\exp(B(v)+B(d)+B(h)+B(v,d)+B(v,h)+B(d,h))} \tag{10}$$

$$c(v,d) = S(1112)/(S(1221) + S(1223)) \tag{11}$$

$$c(v,h) = S(1121)/(S(1212) + S(1232)) \tag{12}$$

$$c(d,h) = S(1211)/(S(1122) + S(1233)) \tag{13}$$

$$k = (T\text{-}3)/S(1234) ; \tag{14}$$

(2) également en sortie du sous-ensemble de segmentation initiale, et en parallèle sur la première voie, une deuxième voie de détermination de probabilités conditionnelles $p_q(x_{mn})$, comprenant elle-même en série :

    (a) un circuit de calcul de paramètres moyenne" et de paramètres "variance" desdites T classes ;
    (b) un deuxième circuit de détermination de probabilités conditionnelles ;

(C) en sortie dudit sous-ensemble de détermination et mise à jour de probabilités, un sous-ensemble d'étiquetage des points dudit ensemble de données, recevant sur des première et deuxième entrées les signaux de sortie desdites première et deuxième voies et sur une troisième entrée lesdits signaux numériques d'entrée du dispositif, ledit circuit étant prévu pour délivrer un nouveau jeu de labels qui constitue la mise à jour de ladite segmentation initiale ;
(D) entre les deux sous-ensembles de segmentation initiale et de détermination et mise à jour de probabilités, un sous-ensemble de séquencement, recevant sur des première et deuxième entrées respectivement le jeu de labels initial obtenu au terme de ladite segmentation initiale et le jeu de labels résultant de la mise à jour et comprenant en série :

    (1) un circuit de comparaison desdits jeux de labels ;
    (2) selon le résultat de ladite comparaison, un circuit d'arrêt du processus de segmentation ou, au contraire, pour une nouvelle mise à jour, de substitution dudit jeu de labels mis à jour audit jeu de labels initial, ledit jeu de labels mis à jour étant envoyé vers l'entrée desdites première et deuxième voies.

Dans un mode particulier de réalisation, ledit ensemble discret comprend des données unimodales et le sous-ensemble de segmentation initiale, recevant lesdits signaux d'entrée, comprend en série :

    (1) un circuit d'extraction de l'histogramme des niveaux de grandeur exprimés par ces signaux d'entrée et qui correspondent respectivement à chaque point dudit ensemble ;
    (2) un circuit de calcul, à partir dudit histogramme, de moyennes sur T classes correspondant à T caractéristiques dudit ensemble discret préalablement sélectionnées, le nombre prédéterminé T étant fourni audit circuit de calcul ;
    (3) un circuit de classification par recherche, pour tous les points dudit ensemble discret, de celle des T moyennes calculées qui est la plus proche du niveau de chaque signal et regroupement correspondant desdits points, ledit circuit de classification délivrant des labels qui indiquent celle des classes à laquelle appartient chaque point au terme de ladite segmentation initiale.

Dans un autre mode de réalisation, ledit ensemble discret comprend des données multimodales pour lesquelles les signaux numériques d'entrée correspondant auxdites données sont regroupés en C canaux, et ledit sous-ensemble de segmentation initiale, recevant lesdits signaux d'entrée, comprend en série :

(1) un étage de segmentation unimodale, recevant parmi lesdits signaux d'entrée les signaux associés aux M x N données qui correspondent à l'un des C canaux et comprenant en série :

(a) un circuit d'extraction de l'histogramme des niveaux de grandeur exprimés par ces signaux d'entrée et qui correspondent respectivement à chaque point dudit ensemble ;

(b) un circuit de calcul, à partir dudit histogramme, de moyennes sur T classes correspondant à T caractéristiques dudit ensemble discret préalablement sélectionnées, le nombre prédéterminé T étant fourni audit circuit de calcul ;

(c) un circuit de classification par recherche, pour tous les points dudit ensemble discret, de celle des T moyennes calculées qui est la plus proche du niveau de chaque signal associé à la donnée correspondant à chaque point puis par regroupement correspondant desdits points, ledit circuit de classification délivrant des labels qui indiquent celle des classes à laquelle appartient chaque point au terme de la segmentation unimodale ;

(2) un sous-ensemble de mise à jour de ladite segmentation unimodale, comprenant en série :

(a) un circuit de mise à jour dudit calcul de moyennes sur les T classes, recevant d'une part les signaux de sortie dudit circuit de classification et d'autre part les signaux associés aux M x N x (C-1) autres données correspondant aux (C-1) autres canaux ;

(b) un circuit de mise à jour de ladite classification, délivrant des labels qui indiquent celle des classes à laquelle appartient chaque point dudit ensemble discret au terme de la segmentation initiale.

Selon un mode préférentiel de réalisation du dispositif, les paramètres "variance" sont donnés par l'expression :

$$V_{q,j}^2 = \Sigma_{(s/\ell(s) = q)} (x_{s,j} - M2_{q,j})^2/Nq$$

où j = 1 à C désigne l'indice du canal, $x_{s,j}$ ledit niveau de grandeur sur le canal j constaté en un site s déterminé, $\ell(s)$ le label attribué à ce site s. $M2_{q,j}$ les moyennes sur chaque canal j indépendamment, et Nq le nombre total de sites auxquels le label q est attribué.

Selon une variante de réalisation du dispositif, les paramètres "variance" sont les éléments de la matrice des covariances sur les différents canaux, donné par l'expression suivante :

$$V_{q,j1,j2} = \Sigma_{(s/\ell(s) = q)} (x_{s,j1} - M2_{q,j1})(x_{s,j1} - M2_{q,j2})/Nq$$

où j1,j2 désignent les indices des deux canaux concernés, $x_{s,j}$ ledit niveau de grandeur sur le canal j constaté en un site s déterminé, $\ell(x)$ le label attribué à ce site s, $M2_{q,j}$ les moyennes sur chaque canal j considéré indépendamment, et Nq le nombre total de sites auxquels le label q est attribué.

Dans l'un ou l'autre cas, une disposition avantageuse, dans ce dispositif, consiste à prévoir le renvoi de la sortie du sous-ensemble de mise à jour de la segmentation unimodale vers son entrée pour réalisation d'une nouvelle classification, jusqu'à interruption de ce processus itératif selon un critère de convergence déterminé.

Quelle que soit la réalisation de ce dispositif qui se trouve concernée, il est en tout cas prévu, dans une réalisation préférentielle de l'invention, que le sous-ensemble d'étiquetage comprend an série :

(1) une mémoire des probabilités conditionnelles délivrées par lesdites première et deuxième voies et de probabilités intermédiaires déterminées de façon interne audit sous-ensemble d'étiquetage ;

(2) un circuit de calcul de grandeurs égales ou proportionnelles aux probabilités marginales de chaque label pour chaque site, ledit calcul étant conduit selon les étapes suivantes, pour tous les q, a, b, c possibles :

(a) on définit $F_{m,n}(q)$ comme la probabilité conditionnelle $p(q/X_{mn})$ d'avoir au site (m,n) un label q, la référence $X_{mn}$ désignant l'ensemble des sites situés au-dessus et à gauche du site (m,n) ;

(b) pour chaque b, on examine la valeur $F = F_{m-1,n-1}(b)$ pour ne la prendre en compte que si elle est supérieure à un seuil déterminé ;

(c) on calcule alors l'expression :

$$H = Y_{m-1,n}(a,b).Z_{m,n-1}(c,b).p(q/a,b,c).p_q(x_{mn})/F$$

où : $Y_{m-1,n}(a,b) = p(a,b/X_{m-1,n})$

**4**

et : $Z_{m,n-1}(c,b) = p(c.b/X_{m,n-1})$

et l'on effectue une addition cumulée des valeurs de H, pour obtenir une grandeur J et une grandeur $L_{m-1,n-1}(b)$ ;

(d) on reprend les étapes (b) et (c) jusqu'à ce que tous les sites aient été traités de façon similaire, la valeur cumulée de J étant ajoutée à $Y_{m,n}(q,c)$ et à $Z_{m,n}(q,a)$ puis remise à zéro, et la valeur cumulée de $L_{m-1,n-1}(b)$ constituant ladite grandeur égale ou proportionnelle à la probabilité marginale du label b au site (m-1,n-1) ;

(e) on reprend les étapes (b) à (d) jusqu'a ce que toutes les combinaisons (q,a,c) aient été traitées de façon similaire ;

(3) un circuit d'étiquetage des sites, par comparaison des valeurs de $L_{m-1,n-1}(b)$ et attribution à chaque site (m-1,n-1) du label b correspondant à la valeur de $L_{m-1,n-1}(b)$ la plus grande.

Dans le cas de ce dernier mode de réalisation, une variante avantageuse consiste en ce que, dans le circuit de calcul de grandeurs égales ou proportionnelles aux probabilités marginales de chaque label pour chaque site, il est prévu dans l'étape (c) une étape ($c_2$) supplémentaire de normalisation par division de toutes les valeurs de Y et de Z par une norme $N_{m,n}$ égale, pour tous les b, à $\Sigma_b L_{m-1,n-1}(b)$.

Les particularités et avantages de l'invention apparaîtront de façon plus détaillée dans la description qui suit et dans les dessins annexés, donnés à titre d'exemples non limitatifs et dans lesquels :

- les figures 1 et 4 montrent deux exemples de réalisation du dispositif selon l'invention ;
- la figure 2 représente un exemple de chaîne de Markov d'ordre 3, et la figure 3 montre dans ce cas les différentes configurations possibles, dans lesquelles les pixels reliés par un trait, et seulement ceux-ci, sont identiques.

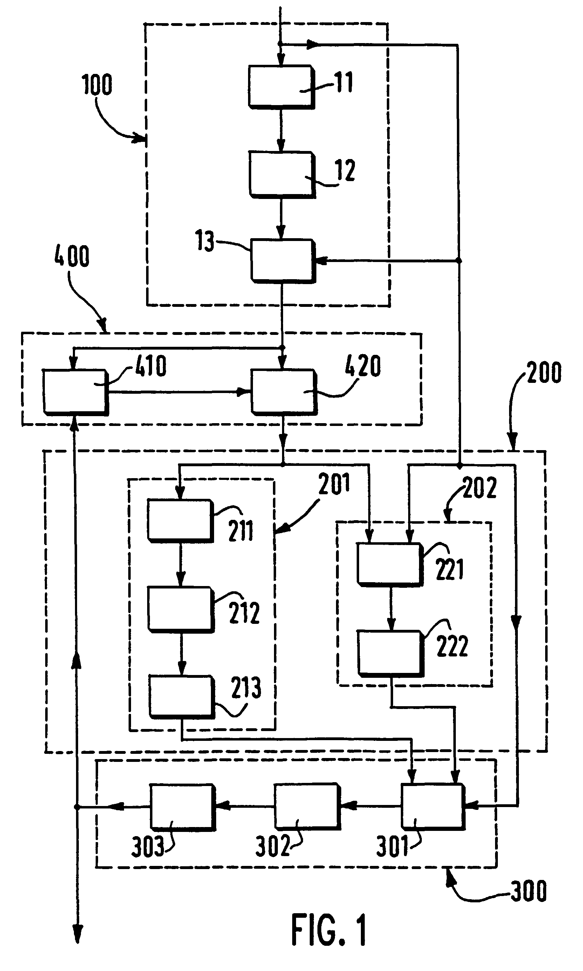

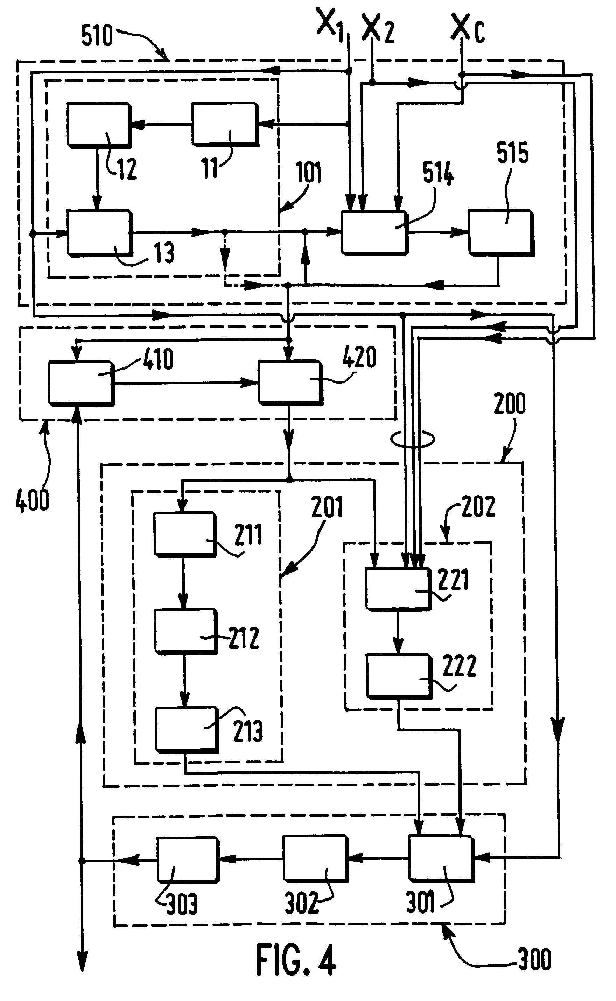

Avant de décrire plus précisément des exemples d'application de l'invention à la segmentation d'images, on rappelle que, dans une telle application, les images à segmenter ont été prélevées par des moyens qui n'entrent pas dans le cadre de cette invention et qui sont directement dépendants de l'application. Les images peuvent provenir de satellites, avoir été obtenues à l'aide d'appareils médicaux, etc..., elles peuvent aussi être déjà le résultat d'un prétraitement, comme par exemple dans le cas d'images texturées où à chaque image prétraitée correspondent des vecteurs contenant pour chaque site des caractéristiques de textures tirées préalablement de l'image originale. Dans tous les cas, ces images sont disponibles, à l'entrée du dispositif décrit, sous forme de signaux numériques. Ces signaux correspondent, dans l'exemple décrit en référence à la figure 1, à des données unimodales et, dans l'exemple décrit en référence à la figure 4, à des données multimodales regroupées en C canaux désignés par j = 1, 2,..., C.

Dans la séquence des images successives, chaque image numérique est ici définie à l'aide d'un réseau bidimensionnel de points de coordonnées (x,y), ou sites s (m,n) avec m = 1 à M et n = 1 à N, auquel sont associés des vecteurs dits observables I(x,y) quantifiés, pour la composante j de chaque vecteur, sur $V_j$ valeurs distinctes (par exemple de 0 pour le ou les points les plus sombres à 255 pour le ou les points les plus clairs), régulièrement espacées en général et appartenant à un ensemble $G_j = g_1, g_2, g_3,..., g_{vj}$. La segmentation de telles images consiste à y définir des régions, soit an réduisant le nombre des valeurs de quantification des vecteurs observables à l'aide d'une technique de transformation qui élimine parmi les données initiales les informations redondantes pour ne conserver que les informations essentielles, soit, dans le cas de textures, an subdivisant les images en régions spatialement cohérentes selon certains critères d'homogénéité.

Pour respecter le formalisme mathématique qui est an général adopté lorsqu'on utilise une modélisation par champ de Markov (les rappels théoriques concernant cette modélisation elle-même seront effectués plus loin dans la description), on dira, dans la suite de la présente description, qu'à chaque image X de la séquence des images d'entrée est associé un ensemble S de sites qui correspondent à la localisation de chaque pixel. Chaque site i appartient à cet ensemble S qui comprend M lignes x N colonnes.

La segmentation d'une image consiste à associer à chaque pixel de celle-ci une étiquette ou label, qu'on notera $\ell(m,n)$, m et n désignant respectivement la ligne courante et la colonne courante du pixel considéré, et désignant donc un site déterminé associé à ce pixel. Ces labels permettent de classer chaque pixel dans une région déterminée de l'image, sur la base de propriété(s) particulière(s) reconnue(s) comme commune(s) à la région considérée. Il est bien entendu ici que ces labels ne sont pas directement observables ou mesurables à partir des signaux d'entrée représentatifs des images, et qu'il faut donc les déterminer. Dans le cadre de la présente invention, le nombre de classes, appelé par exemple T, doit être prédéfini par l'utilisateur. T étant un nombre entier arbitraire. Par exemple, dans le cas d'une classification de terrains à partir d'images fournies par des satellites, on aura tendance à définir T comme étant le nombre de types de terrain différents connus a priori. De façon similaire, en imagerie médicale on choisira le nombre de types de tissu présents dans la partie du corps représentée par l'image.

Dans un premier exemple de réalisation, représenté sur la figure 1 et qui correspond à une segmentation à partir de données numériques unimodales (c'est-à-dire de vecteurs de données observables I(x,y) unimodales), le dispositif de segmentation selon l'invention comprend tout d'abord un sous-ensemble de segmentation initiale 100. Ce sous-ensemble 100, qui reçoit les signaux numériques représentatifs de chaque image à segmenter, comprend en série un circuit il d'extraction de l'histogramme des valeurs observables I(x,y), un circuit 12 de calcul de moyennes sur T classes correspondant à T caractéristiques d'image sélectionnées pour la segmentation, et un circuit 13 de classification.

La mise en oeuvre de ce sous-ensemble 100 est la suivante. En fonction de l'importance de la segmentation recherchée dans l'application considérée, un certain nombre T de classes est choisi en correspondance à T caractéristiques déterminées, par exemple T classes correspondant, dans le cas d'images en provenance de satellites, à des forêts, à des champs, à des lacs, etc..., ou, dans le cas d'images médicales, à différents types de tissus corporels (dans la suite de la description, on peut prendre par exemple T = 8). L'histogramme des données observables I(x,y), extrait à l'aide du circuit 11, est fourni au circuit 12 qui le divise en 2T zones de la façon suivante on divise l'histogramme en T zones de surface égale, puis on détermine dans chacune de ces T zones sa moyenne M1 (T). Cet ensemble de subdivision revient, an fait, à diviser l'histogramme en 2T zones de surface égale délimitées par (2T+1) valeurs observables g(0), g(1), g(2),..., g(2T-1), g(2T), et à prendre les valeurs g(1), g(3),..., g(2T-3), g(2T-1) comme valeurs de moyennes.

Ces T moyennes étant maintenant déterminées, le circuit 13 de classification, qui reçoit les signaux de sortie du circuit 12 et les (M x N) signaux numériques d'entrée du dispositif, recherche pour tout pixel (de site i) de l'image la moyenne la plus proche. Pour cela, ce circuit 13 effectue la détermination de la grandeur |g(x) - M1(T)|. Dans cette expression g(x) est la valeur quantifiée attachée au pixel considéré, M1(T) prend successivement les T valeurs possibles (ici, T = 8, chaque pixel étant alors, dans ce cas, rangé dans l'une des T = 8 classes considérées), et le label correspondant à chaque pixel est noté ici $\ell$(CL), où l'indice CL peut prendre T valeurs distinctes. Ce label $\ell$(CL), déterminé pour chacun des pixels de l'image, définit une première segmentation de l'image, qu'on appelle ici segmentation initiale. Les M x N labels ainsi définis constituent les (M x N) signaux de sortie du sous-ensemble de segmentation initiale 100.

Ce sous-ensemble 100 est suivi d'un sous-ensemble 200 de mise à jour des probabilités, qui reçoit d'une part les (M x N) signaux d'entrée du dispositif et d'autre part les (M x N) labels déterminés par le sous-ensemble 100 et délivre, comme on le verra ci-après, des probabilités conditionnelles p(q/abc) et $P_q(x)$ respectivement. Ce sous-ensemble 200 comprend, à cet effet, en parallèle, des première et deuxième voies 201 et 202 de détermination de ces probabilités conditionnelles, et ladite détermination est effectuée comme indiqué maintenant.

Si, dans une image, on appelle passé d'un site s quelconque l'ensemble des sites d'indice inférieur (c'est-à-dire, par exemple pour un balayage d'image de type télévision, l'ensemble constitué par les sites déjà balayés sur la même ligne que ce site s et les sites de toutes les lignes supérieures), la densité de probabilité attachée à l'ensemble L des labels $\ell$ possibles s'exprime sous la forme d'un produit (effectué sur tous les sites) de probabilités d'avoir le label $\ell$(s) au site s = (m,n) , lesdites probabilités étant conditionnelles au passé de ce site. La propriété d'un champ de Markov dit unilatéral se concrétise de la façon suivante : ces probabilités conditionnelles (ou probabilités de transition) ne dépendent pas de tous les labels du passé de ce site, mais seulement des labels d'un nombre limité des sites appartenant à ce passé. Ce nombre de sites limité, qu'on appelle le sous-ensemble des parents de s, définit l'ordre du champ de Markov ainsi constitué, et le site s lui-même est appelé par la suite le site enfant de ses parents.

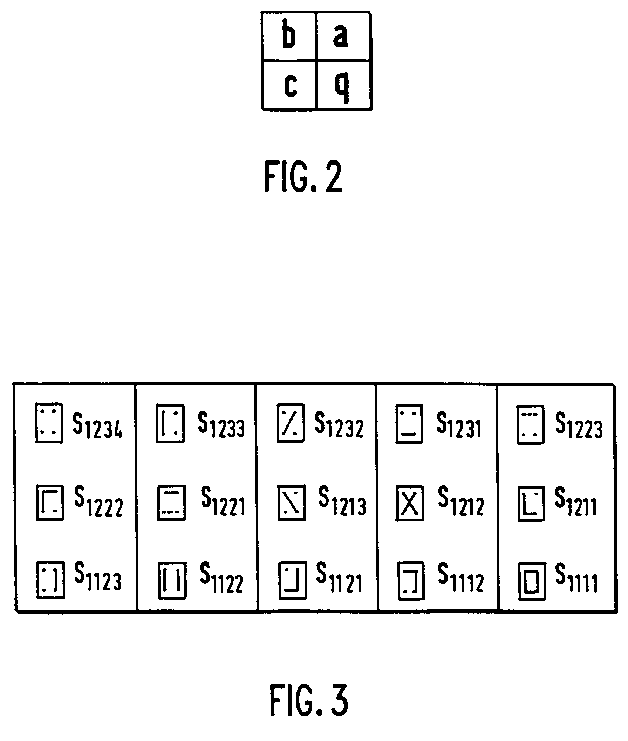

Dans les exemples de réalisation mentionnés dans la présente description, on ne décrira qu'un modèle d'ordre 3, c'est-à-dire que la probabilité p($\ell$(m,n)) d'obtenir un label $\ell$(m,n) en un site i(m,n) situé à l'intersection de la m-ième ligne et de la n-ième colonne ne dépend que des probabilités déterminées de façon similaire pour les sites i(m-1, n), i(m-1, n-1), i(m, n-1), avec m et n supérieurs à 1. La figure 2 montre un tel modèle d'ordre 3 : pour simplifier les notations, on a appelé q le label du site i (ou site "enfant"), et a,b,c les labels des trois autres sites "parents". Avec un tel exemple d'ordre 3, et dans le cas où toutes les probabilités conditionnelles sont présupposées non nulles, l'expression de la probabilité conditionnelle (ou de transition) peut être notée sous forme exponentielle à l'aide d'une fonction (ou opérateur) L(q/abc). On appelle L un propagateur, car cet opérateur propage une influence des parents aux enfants. On écrit alors :

$$p(q/a,b,c) = \exp L(q/a,b,c)/Z(a,b,c) \qquad (1)$$

Le dénominateur Z est simplement un facteur de normalisation :

$$Z(a,b,c) = \sum_u \exp L(u/a,b,c), \qquad (2)$$

la somme $\Sigma$ sur u étant effectuée sur les T valeurs de labels. Ainsi, Z permet d'assurer la contrainte de normalisation (on doit en effet vérifier l'égalité $\Sigma$ u P(u/a,b,c) = 1 , pour tous les sites). Dans l'approche ici faite, le propagateur L(q/a,b,c) est défini par l'expression (3) suivante :

$$L(q/a,b,c) = B(v). \, d(q,a) + B(d). \, d(q,b). + B(h. \, d(q,c) + B(v,d). \, d(q,a,b) + B(d,h). \, d(q,b,c)$$
$$+ B(v,h). \, d(q,a,c) + B(v,d,h). \, d(q,a,b,c) \tag{3}$$

Dans cette expression, y, d, h désignent respectivement le site parent vertical, diagonal ou horizontal du site enfant i, les B(.) sont des paramètres indépendants constituant des coefficients dits de propagation, et les d(.) sont égaux à 1 si les labels correspondant aux indices entre parenthèses sont identiques, ou à 0 sinon. Dans le propagateur ainsi défini, les sept valeurs B(.), qui représentent les paramètres du modèle markovien, caractérisent la tendance d'un site enfant de se voir décerner le même label que ses parents : donc, si par exemple la constante B(v) est positive et grande, le site enfant aura forte tendance à avoir le même label que son parent vertical.

La connaissance de la probabilité p(q/a,b,c) dépend donc de celle du propagateur L. c'est-à-dire de celle des paramètres B(.). On peut alors démontrer que la connaissance de ces paramètres dépend elle-même de celle des probabilités de configuration à l'intérieur du modèle de chaîne de Markov choisi (celui représenté sur la figure 2). Ces probabilités de configuration sont notées respectivement S(1234), S(1233), S(1232), S(1231), S(1223), S(1222), S(1221), S (1213), S(1212), S(1211), S(1123), S(1122), S(1121), S(1112), S(1111). La signification de ces grandeurs S(.) dans le cas du modèle de la figure 2 est visualisée sur la figure 3, qui associe à chaque probabilité de configuration S(.) la représentation de la configuration correspondante, à savoir celle pour laquelle les pixels reliés par un trait, et seulement ceux-ci, sont identiques. Ces probabilités de configuration sont déterminées par simple comptage du nombre de fois où, dans l'image concernée, apparaît une configuration déterminée.

Ce comptage est réalisé dans la première voie 201 qui comprend à cet effet un circuit 211 de détermination de ces probabilités de configuration S(.) dans l'image segmentée présente en sortie du sous-ensemble 510. Ce circuit 211 est suivi d'un circuit 212 de calcul des coefficients de propagation B(.). On a vu plus haut que la connaissance de ces coefficients dépendait de celle des probabilités S(.). Sans expliciter l'ensemble des raisonnements qui permettent d'établir cette dépendance, on ne donnera ici que les relations (4) à (14) qui lient les B(.) et les S(.), et qui, dans le cas où le nombre T est supérieur ou égal à 4, sont les suivantes :

$$\exp B(v) = k.S(1123) \tag{4}$$

$$\exp B(d) = k.S(1213) \tag{5}$$

$$\exp B(h) = k.S(1231) \tag{6}$$

$$\exp B(v,d) = c(v,d).(\exp.B(h) + T\text{-}2).\exp(B(v) + B(d)) \tag{7}$$

$$\exp B(v,h) = c(v,h).(\exp.B(d) + T\text{-}2).\exp(B(v) + B(h)) \tag{8}$$

$$\exp B(d,h) = c(d,h).(\exp B(v) + T\text{-}2).\exp(B(d) + B(h)) \tag{9}$$

$$\exp B(v,d,h) = \frac{(T\text{-}1).S(1111)/S(1222)}{\exp(B(v)+B(d)+B(h)+B(v,d)+B(v,h)+B(d,h))} \tag{10}$$

$$c(v,d) = S(1112)/(S(1221) + S(1223)) \tag{11}$$

$$c(v,h) = S(1121)/(S(1212) + S(1232)) \tag{12}$$

$$c(d,h) = S(1211)/(S(1122) + S(1233)) \tag{13}$$

$$k = (T\text{-}3)/S(1234), \tag{14}$$

Dans le cas où T = 3, les équations (4) à (14) restent vérifiées, mais la valeur de k est arbitraire (toute valeur de k donne lieu à la même valeur de L(q/a,b,c) et conduit donc à des segmentations identiques). On peut par exemple choisir k tel que B(v) + B(d) + B(h) = 0 , ce qui implique que k soit égal à la racine cubique de 1/S(1123) x S(1213) x S(1231), mais tout autre choix de k convient aussi. De même, dans le cas où T = 2, toute valeur de k donne lieu aux mêmes valeurs L(q/a,b,c), et donc à des segmentations identiques. Les coefficients B(.) étant ainsi déterminés, un circuit 213 prévu en série avec les circuits 211 et 212 détermine, conformément à l'expression (1), la probabilité conditionnelle (ou de transition) p(q/a,b,c).

La deuxième voie 202 reçoit, comme la première, les (M x N) labels de sortie du sous-ensemble 100, et les fournit à un circuit 221 de calcul de paramètres de classe (ici, moyennes et variances). En effet, le circuit 12 avait effectué un premier calcul de moyennes sur T classes, mais ces classes avaient été, pour l'initialisation du fonctionnement du dispositif de segmentation, constituées de façon arbitraire, par division de l'histogramme des valeurs observables en T zones. Cette segmentation initiale arbitraire étant maintenant remplacée an sortie du sous-ensemble 100 par une segmentation répondant désormais au moins approximativement à un critère de classement, il est donc possible d'effectuer un nouveau calcul de paramètres pour chacune des T classes répondant aux T labels possibles pour les pixels, plus précisément un nouveau calcul de la moyenne, notée M2(T), ainsi que le calcul de la variance (élevée au carré) correspondante, notée V2(T). Les T valeurs M2(T) et V2(T) ainsi calculées sont les 2T signaux de sortie du circuit 221.

Ces 2T signaux sont fournis à un circuit 222 de détermination de la probabilité conditionnelle d'un niveau de gris x pour un label q constaté an un site i. On sait en effet que la segmentation finale doit être an accord avec les données initiales, qui résultent d'une observation ou d'une mesure. Dans le cas de données observables I(x,y) unimodales, cette probabilité conditionnelle, notée $p_q(x)$, est donnée pour chaque classe par l'expression (15) suivante :

$$p_q(x) = \frac{1}{V2(T)\sqrt{2\pi}} .exp \frac{(x-M2(T))^2}{2V2(T)^2} \tag{15}$$

Les probabilités conditionnelles de sortie des deux voies 201 et 202, présentes en sortie des circuits 213 et 222, constituent les deux types de signaux de sortie du sous-ensemble 200 de mise à jour des probabilités, et sont alors envoyées vers deux entrées correspondantes d'un sous-ensemble 300 d'étiquetage des pixels. Ce sous-ensemble 300 reçoit également, sur une troisième entrée, les (M x N) signaux numériques d'entrée du dispositif, et détermine des probabilités dites marginales, à partir desquelles sont à leur tour déterminés de nouveaux labels $\ell(.)$ définissant une nouvelle segmentation de l'image. Ces probabilités marginales sont déterminées comme indiqué ci-dessous, dans la description du fonctionnement du sous-ensemble 300.

On rappellera cependant, préalablement, quelques notations. Le site qui est momentanément traité est le site (m,n), avec m compris entre 1 et M inclus et n entre 1 et N inclus. La partie d'image qui est située au-dessus et à gauche du site (m,n) est notée $X_{mn}$. La probabilité conditionnelle $p(q/X_{mn})$ d'avoir au site (m,n) le label q est notée $F_{mn}(q)$. On désigne enfin par $p(q,a,b,c/X_{mn})$ la probabilité marginale recherchée d'avoir les labels (ou étiquettes) $\ell_{m,n} = q$, $\ell_{m-1,n} = a$ $\ell_{m-1,n-1} = b$, $\ell_{m,n-1} = c$ sur les sites correspondants.

La détermination de $p(q,a,b,c/X_{mn})$ pour chaque site est réalisée, dans le sous-ensemble 300, comme indiqué maintenant, les données utilisées par ce sous-ensemble étant les suivantes : les probabilités conditionnelles $p_q(x)$ délivrées par la voie 202 (pour lesquelles l'ensemble des x pour chaque site m,n correspond à l'ensemble des données observables I), les probabilités conditionnelles $p(q/a,b,c)$ délivrées par la voie 201, ainsi que les probabilités suivantes :

$$Y_{m-1,n}(a,b) = p(a,b/X_{m-1,n}) \text{ et } Z_{m,n-1}(c,b) = p(c,b/X_{m,n-1}),$$

déterminées pour tous les q, a, b, c possibles et de façon interne audit sous-ensemble 300. Toutes ces probabilités sont stockées dans une mémoire 301.

Un circuit de calcul 302 situé en sortie de cette mémoire procède alors, pour tous les q, a, b, c possibles, aux déterminations suivantes, par étapes successivement énumérées :

(1) pour chaque b, on examine la valeur $F = F_{m-1,n-1}(b)$, qui n'est pas prise en compte si elle est inférieure à un seuil déterminé, par exemple $10^{-8}$ ;

(2) si au contraire cette valeur dépasse ledit seuil, on calcule une grandeur H, notée $H_{mn}(q,a,b,c)$ selon l'expression (16) :

$$H = Y_{m-1,n}(a,b).Z_{m,n-1}(c,b).p(q/a,b,c).p_q(x_{mn})/F \tag{16}$$

F venant d'être définie, et les Y et Z ayant été préalablement initialisés à zéro (puis calculés de façon particulière - explicitée plus loin- pour la première ligne et pour la première colonne) ;

(3) cette valeur de H est additionnée à une grandeur J, initialisée à zéro (cette addition est en fait une addition cumulée des valeurs de H) et à une grandeur $L_{m-1,n-1}(b)$ (également initialisée à zéro) égale ou proportionnelle à la probabilité marginale du label b au site (m-1,n-1) et donnée par l'expression (17) :

$$L_{m-1,n-1}(b) = \Sigma_{qac} H_{mn}(q,a,b,c) \tag{17}$$

puis on reprend l'étape (1) tant que tous les b n'ont pas été traités de façon similaire ;

(4) la valeur ainsi obtenue pour J est ajoutée à $Y_{m,n}(q,c)$ et à $Z_{m,n}(q,a)$ ;

(5) après remise de J à zéro, on reprend les étapes (1) à (4) tant que toutes les combinaisons (q,a,c) n'ont pas été traitées de façon similaire.

Lorsque toutes les combinaisons (q,a,c) ont été effectivement prises en compte, le circuit de calcul 302 délivre pour toutes ces combinaisons les grandeurs $L_{m-1,n-1}(b)$, $Y_{m,n}(qc)$, $Z_{m,n}(qa)$. Pour éviter que les variables conservées en mémoire ne deviennent trop petites pour un traitement numérique précis, on procède à une opération de normalisation, qui consiste dans le cas présent à déterminer une norme $N_{m,n}$ définie comme la somme des grandeurs $L_{m-1,n-1}(b)$ pour tous les b, et à diviser toutes les grandeurs $Y_{m,n}(qc)$ et $Z_{m,n}(qa)$ par cette norme $N_{m,n}$. On renvoie ensuite du circuit 302 vers la mémoire 301 les valeurs normalisées qui sont nécessaires pour les calculs ultérieurs. Comme on l'a vu plus haut, les probabilités Y et Z sont utilisées de façon interne au sous-ensemble 300, pour le calcul de H selon l'expression (16), tandis que les valeurs de $L_{m-1,n-1}(b)$ constituent les signaux de sortie du circuit de calcul 302.

Ce circuit 302, qui a donc calculé des grandeurs égales ou proportionnelles aux probabilités marginales de chaque label pour chaque site, est alors suivi d'un circuit 303 d'étiquetage des sites (sauf les sites des première et dernière lignes et des première et dernière colonnes, qui sont traités de manière particulière comme on le décrit ci-dessous). Cet étiquetage des sites est réalisé par comparaison des valeurs de $L_{m-1,n-1}(b)$ et attribution au site (m-1, n-1) du label b correspondant à la valeur de L la plus grande.

Dans le cas d'un site de la première ligne ou de la première colonne, on n'effectue pas d'étiquetage, mais simplement on remplit progressivement la mémoire 301 (comme indiqué ci-après) avec les valeurs nécessaires pour le traitement des lignes et colonnes suivantes. Pour le premier site (1,1), la probabilité de distribution des labels est donnée, après normalisation, par :

$$F_{1,1}(q) = p_q(x_{1,1})/\Sigma_q p_q(x_{1,1}) \tag{18}$$

expression dans laquelle $P_q(x_{1,1})$ est égale pour tous les labels. Cette valeur $F_{1,1}(q)$ est stockée dans la mémoire 301.

Pour le traitement des sites de la première ligne, on calcule les $F_{1,n}(q)$ à partir des expressions (19) à (22) suivantes :

$$F'_{1,n}(q) = \Sigma_c Y_{1,n}(q,c) \tag{19}$$

ou :

$$F'_{1,n}(q) = \Sigma_c F'_{1,n-1}(c). P^{hor}(q/c). p_q(x_{1,n}) \tag{20}$$

expression (20) dans laquelle $P^{hor}(q/c)$, calculé dans la première voie 201, est donné par :

$$P^{hor}(q/c) = \exp((B(h).d(q,c))-\log(\exp.B(h)+T-1)) \tag{21}$$

Ce calcul est, comme précédemment, suivi d'une normalisation (division par $N_{1,n} = \Sigma_q F'_{1,n}(q)$), qui conduit finalement à :

$$F'_{1,n}(q) = F'_{1,n}(q)/\Sigma_q F'_{1,n}(q) \tag{22}$$

Pour le traitement des sites de la première colonne, on calcule de façon similaire les $F_{m,1}(q)$ à partir des expressions (23) à (26) suivantes :

$$F'_{m,1}(q) = \Sigma_a Z_{m,1}(q,a) \tag{23}$$

ou :

$$F'_{m,1}(q) = \Sigma_a F'_{m-1,1}(a).P^{ver}(q/a).p_q(x_{m,1}) \tag{24}$$

expression (24) dans laquelle $P^{ver}(q/a)$, également calculé dans la première voie 201, est donné par :

$$P^{ver}(q/a) = \exp((B(v).d(q,a)) - \log(\exp.B(v)+T-1)) \tag{25}$$

Ce calcul est, là encore, suivi d'une normalisation conduisant finalement à :

$$F_{m,1}(q) = F'_{m,1}(q)/\Sigma_q \, F'_{m,1}(q) \tag{26}$$

Les valeurs de Y, Z, F sont au fur et à mesure conservées dans la mémoire 301, pour permettre les calculs ultérieurs.

Dans le cas d'un site de la dernière colonne (n = N), le circuit de calcul 302 évalue $L_{m-1,n}(a) = \Sigma_q \, Z_{m,n}(qa)$ et le label qui rend $L_{m-1,n}$ maximal est attribué au site (m-1, N). De même, dans le cas d'un site de la dernière ligne (m = M), le circuit de calcul 302 évalue $L_{m,n-1}(c) = \Sigma_q \, Y_{m,n}(qc)$ et le label qui rend $L_{m,n-1}$ maximal est attribué au site (M, n-1). Pour le site (M,N), le circuit 302 évalue $L_{m,n}(q) = F_{m,n}(q)$ et le label qui rend $L_{m,n}$ maximal est attribué au site (M,N). L'ensemble des labels ainsi délivrés par le circuit 303 forme un jeu de labels modifié constituant une mise à jour du jeu de labels initial.

Un sous-ensemble de séquencement 400 reçoit alors, sur des première et deuxième entrées, ledit jeu de labels initial et le jeu de labels modifié résultant de la mise à jour, et en effectue tout d'abord la comparaison dans un circuit de comparaison 410. Selon que les jeux de labels diffèrent ou non pour plus d'un nombre déterminé de pixels (par exemple 40), un circuit 420 situé à la suite du circuit 410 commande l'arrêt du processus de segmentation (et le jeu de labels mis à jour est définitivement sélectionné) ou au contraire la substitution, à l'entrée des deux voies 201 et 202, dudit jeu de labels mis à jour au jeu de labels initial. S'il y a substitution, une nouvelle mise en oeuvre des sous-ensembles 200 à 400 intervient. S'il y a au contraire arrêt de ce processus, la mise en oeuvre du dispositif de segmentation selon l'invention est terminée, et le jeu de labels ainsi sélectionné constitue les signaux de sortie définitifs de ce dispositif de segmentation.

Bien entendu, l'invention n'est pas limitée à cet exemple de réalisation, à partir duquel des variantes peuvent être proposées sans sortir pour cela du cadre de cette invention. En particulier, dans un deuxième exemple de réalisation, représenté sur la figure 4 et qui correspond à une segmentation à partir de données numériques multimodales (c'est-à-dire de vecteurs de données observables I(x,y) multimodales), le dispositif de segmentation selon l'invention comprend cette fois tout d'abord un sous-ensemble de segmentation initiale 510. Ce sous-ensemble 510, qui reçoit lesdites données numériques, comprend un étage 101 de segmentation unimodale recevant parmi les M x N x C données d'entrée les M x N données qui correspondent à un seul des canaux. Cet étage 101 comprend lui-même en série exactement les mêmes éléments que le sous-ensemble de segmentation initiale 100, à savoir un circuit 11 d'extraction de l'histogramme desdites M x N données, un circuit 12 de calcul de moyennes sur T classes correspondant à T caractéristiques d'image sélectionnées pour la segmentation, et un circuit 13 de classification. La mise en oeuvre de cet étage 101 est la même que celle du sous-ensemble 100 de la figure 1 et les M x N labels $\ell(CL)$ déterminés, qui constituent les (M x N) signaux de sortie de l'étage de segmentation 101, définissent une première segmentation unimodale de l'image.

Dans une première réalisation, cette segmentation constitue la sortie de l'étage 510 (cette situation est représentée sur la figure 4 à l'aide de la connexion en trait discontinu en sortie du circuit 13). Dans une deuxième réalisation, l'étage 101 est suivi en série d'un sous-ensemble de mise à jour de cette segmentation unimodale, comprenant en série un circuit 514 de mise à jour du calcul de moyennes effectué par le circuit 12, et un circuit 515 de mise à jour de la classification effectuée par le circuit 13. Le circuit 514, identique au circuit 221 décrit plus loin, reçoit d'une part les signaux de sortie du circuit de classification 13 et d'autre part les signaux associés aux M x N x C données d'entrée. Le circuit 515 qui le suit délivre des labels qui indiquent celle des classes à laquelle appartient chaque point au terme de ladite segmentation initiale. Dans ladite deuxième réalisation, cette segmentation constitue la sortie de l'étage 510.

Une troisième réalisation de l'étage 510, fonctionnant cette fois de façon itérative, prévoit, comme indiqué sur la figure 4, d'envoyer la sortie du sous-ensemble de mise à jour de la segmentation unimodale vers son entrée (c'est-à-dire la sortie du circuit 515 vers l'entrée du circuit 514). Ainsi, après calcul des valeurs moyennes de chaque classe séparément (par la prise en compte des pixels appartenant à cette classe, à l'aide de formules équivalentes à l'expression (15)), puis classement des pixels de l'image suivant les C canaux par un critère tel que celui d'une distance minimale, il est possible d'obtenir une nouvelle classification des pixels. Ce processus peut être répété, jusqu'à convergence vers un minimum de la distance par exemple. Cette segmentation constitue la sortie de l'étage 510 dans sa troisième réalisation.

Le sous-ensemble de segmentation initiale 510 est suivi, en série, du sous-ensemble 200 de mise à jour de probabilités, qui reçoit comme précédemment les signaux d'entrée du dispositif et les (M x N) labels déterminés par le sous-ensemble 510 et délivre les probabilités conditionnelles p(q/abc) et $P_q(x)$. Le sous-ensemble 200 comprend, comme dans le cas de la figure 1, les première et deuxième voies 201 et 202, identiques à la réalisation déjà décrite, sauf en ce qui concerne le circuit 221 de calcul de paramètres de classe.

Dans une première variante de réalisation, le circuit 221 calcule en effet les moyennes et les variances, sur chaque canal indépendamment. Les moyennes, notées $M2_{q,j}$, sont données par l'expression (27) suivantes :

$$M2_{q,j} = \Sigma_{(s/\ell(s=q))} \, x_{s,j}/Nq \tag{27}$$

où j = 1 à C désigne l'indice du canal, $x_{s,j}$ le niveau de grandeur sur le canal j constaté en un site s déterminé, $\ell(s)$ le

label attribué à ce site s, et Nq le nombre total de sites auquel le label q est attribué. Les variances V sont, elles, données ici par l'expression (28) suivante :

$$V_{q,j}^2 = \Sigma_{(s/\ell(s) = q)} (x_{s,j} - M2_{q,j})^2/Nq \qquad (28)$$

Dans une autre variante de réalisation, le jeu de paramètres de classe comprend, en plus des moyennes $M2_{q,j}$, les éléments de la matrice des covariances sur les différents canaux, donné par l'expression (29) suivante :

$$V_{q,j1,j2} = \Sigma_{(s/\ell(s) = q)} (x_{s,j1}-M2_{q,j1})(x_{s,j1}-M2_{q,j2})/Nq \qquad (29)$$

Dans l'une ou l'autre de ces variantes, les valeurs M2 et V ainsi calculées sont, comme précédemment, les 2T signaux de sortie du circuit 221.

Ces signaux sont fournis au circuit 222 de détermination de probabilité conditionnelle. Dans le cas de la première variante de réalisation du circuit 221, cette probabilité conditionnelle $p_q(x)$ est donnée pour chaque classe par l'expression (30) suivante :

$$p_q(x) = \frac{1}{\sqrt{2\pi} \prod_{j=1}^{j=D} V_{q,j}} \exp\left(-0,5 \sum_{j=1}^{j=D} \frac{(x_j-M2_{q,j})^2}{V_{q,j}^2}\right) \qquad (30)$$

Dans le cas de la deuxième variante de réalisation du circuit 221, la probabilité conditionnelle déterminée par le circuit 222 est cette fois donnée, pour chaque classe, par l'expression (31) suivante :

$$p_q(x) = \frac{1}{\sqrt{2\pi} \, \det(V_{q,j1j2})} \exp\left(-0,5 \sum_{j=1}^{j=D} (x_{j1}-M2_{q,j1}) b_{q,j1j2}(x_{j2}-M2_{qj2})\right) \qquad (31)$$

expression (31) dans laquelle $b_{q,j1j2}$ est la matrice inverse de $V_{q,j1j2}$. Dans l'un et l'autre cas, les probabilités conditionnelles de sortie des deux voies 201 et 202, présentes en sortie des circuits 213 et 222, constituent les signaux de sortie du sous-ensemble 200 envoyés vers les deux entrées du sous-ensemble 300 d'étiquetage des pixels. Ce sous-ensemble 300 et le sous-ensemble de séquencement 400 ne sont pas modifiés par rapport à la réalisation de la figure 1.

**Revendications**

1. Dispositif de segmentation d'un ensemble discret de données correspondant à des sites (m,n) avec m compris entre 1 et M inclus et n entre 1 et N inclus, à partir de signaux numériques d'entrée correspondant auxdites données, caractérisé en ce qu'il comprend en série:

   (A) un sous-ensemble (100) de segmentation initiale par extraction d'histogramme, calcul de moyennes sur T classes, et classification par recherche, pour chaque signal numérique d'entrée, de celle des moyennes qui est la plus proche du niveau dudit signal ;
   (B) un sous-ensemble (200) de détermination et mise à jour de probabilités, recevant d'une part les labels déterminés par ledit sous-ensemble de segmentation initiale et d'autre part lesdits signaux numériques d'entrée et comprenant lui-même :

      (1) en sortie dudit sous-ensemble de segmentation initiale, une première voie (201) de détermination de probabilités conditionnelles p(q/a,b,c), comprenant elle-même en série :

         (a) un circuit (211) de détermination de probabilités dites de configuration traduisant l'identité ou la non-identité des niveaux correspondant à chacune des quinze configurations possibles à l'intérieur d'un modèle bidimensionnel en carré (q,a,b,c) de chaîne de Markov, q étant appelé dans ledit ensemble à segmenter le label à déterminer au site dit "enfant" et a,b,c les labels des sites dits "parents" ;
         (b) un circuit (212) de calcul de coefficients de propagation pour le modèle de chaîne de Markov ainsi choisi ;

(c) un premier circuit (213) de détermination de la probabilité conditionnelle p(q/abc) = exp L(q/abc)/Z(abc) , où Z est un facteur de normalisation et où L(q/abc) est un opérateur dit de propagation de l'influence des parents aux enfants, défini par les expressions (3) à (14) :

$$L(q/abc) = B(v). d(qa) + B(d). d(qb). + B(h). d(qc) + B(v,d). d(qab) + B(d,h). d(qbc) + B(v,h). d(qac) + B(v,d.h). d(qabc) \tag{3}$$

$$\exp B(v) = k.S(1123) \tag{4}$$

$$\exp B(d) = k.S(1213) \tag{5}$$

$$\exp B(h) = k.S(1231) \tag{6}$$

$$\exp B(v,d) = c(v,d).(\exp.B(h) + T\text{-}2).\exp (B(v) + B(d)) \tag{7}$$

$$\exp B(v,h) = c(v,h).(\exp.B(d) + T\text{-}2).\exp (B(v) + B(h)) \tag{8}$$

$$\exp B(d,h) = c(d,h).(\exp B(v) + T\text{-}2).\exp (B(d) + B(h)) \tag{9}$$

$$\exp B(v,d,h) = \frac{(T\text{-}1).S(1111)/S(1222)}{\exp(B(v)+B(d)+B(h)+B(v,d)+B(v,h)+B(d,h))} \tag{10}$$

$$c(v,d) = S(1112)/(S(1221) + S(1223)) \tag{11}$$

$$c(v,h) = S(1121)/(S(1212) + S(1232)) \tag{12}$$

$$c(d,h) = S(1211)/(S(1122) + S(1233)) \tag{13}$$

$$k = (T\text{-}3)/S(1234) ; \tag{14}$$

(2) également en sortie du sous-ensemble (100) de segmentation initiale, et en parallèle sur la première voie (201), une deuxième voie (202) de détermination de probabilités conditionnelles $p_q(x_{mn})$, comprenant elle-même en série :

(a) un circuit (221) de calcul de paramètres "moyenne" et de paramètres "variance" desdites T classes ;
(b) un deuxième circuit (222) de détermination de probabilités conditionnelles ;

(C) en sortie dudit sous-ensemble (200) de détermination et mise à jour de probabilités, un sous-ensemble (300) d'étiquetage des points dudit ensemble de données, recevant sur des première et deuxième entrées les signaux de sortie desdites première et deuxième voies et sur une troisième entrée lesdits signaux numériques d'entrée du dispositif, ledit circuit étant prévu pour délivrer un nouveau jeu de labels qui constitue la mise à jour de ladite segmentation initiale ;
(D) entre les deux sous-ensembles (100, 200) de segmentation initiale et de détermination et mise à jour de probabilités, un sous-ensemble (400) de séquencement, recevant sur des première et deuxième entrées respectivement le jeu de labels initial obtenu au terme de ladite segmentation initiale et le jeu de labels résultant de la mise à jour et comprenant en série :

(1) un circuit (410) de comparaison desdits jeux de labels ;
(2) selon le résultat de ladite comparaison, un circuit (420) d'arrêt du processus de segmentation ou, au contraire, pour une nouvelle mise à jour, de substitution dudit jeu de labels mis à jour audit jeu de labels initial, ledit jeu de labels mis à jour étant envoyé vers l'entrée desdites première et deuxième voies.

2. Dispositif de segmentation selon la revendication 1, caractérisé en ce que ledit ensemble discret comprend des données unimodales et en ce que le sous-ensemble (100) de segmentation initiale, recevant lesdits signaux d'entrée, comprend en série :

(1) un circuit (11) d'extraction de l'histogramme des niveaux de grandeur exprimés par ces signaux d'entrée et qui correspondent respectivement à chaque point dudit ensemble ;

(2) un circuit (12) de calcul, à partir dudit histogramme, de moyennes sur T classes correspondant à T caractéristiques dudit ensemble discret préalablement sélectionnées, le nombre prédéterminé T étant fourni audit circuit de calcul ;

(3) un circuit (13) de classification par recherche, pour tous les points dudit ensemble discret, de celle des T moyennes calculées qui est la plus proche du niveau de chaque signal et regroupement correspondant desdits points, ledit circuit de classification délivrant des labels qui indiquent celle des classes à laquelle appartient chaque point au terme de ladite segmentation initiale.

3. Dispositif de segmentation selon la revendication 1, caractérisé en ce que ledit ensemble discret comprend des données multimodales pour lesquelles les signaux numériques d'entrée correspondant auxdites données sont regroupés en C canaux et en ce que ledit sous-ensemble (510) de segmentation initiale, recevant lesdits signaux d'entrée, comprend an série :

(1) un étage (101) de segmentation unimodale, recevant parmi lesdits signaux d'entrée les signaux associés aux M x N données qui correspondent à l'un des C canaux et comprenant en série :

(a) un circuit (11) d'extraction de l'histogramme des niveaux de grandeur exprimés par ces signaux d'entrée et qui correspondent respectivement à chaque point dudit ensemble ;

(b) un circuit (12) de calcul, à partir dudit histogramme, de moyennes sur T classes correspondant à T caractéristiques dudit ensemble discret préalablement sélectionnées, le nombre prédéterminé T étant fourni audit circuit de calcul ;

(c) un circuit (13) de classification par recherche, pour tous les points dudit ensemble discret, de celle des T moyennes calculées qui est la plus proche du niveau de chaque signal associé à la donnée correspondant à chaque point puis par regroupement correspondant desdits points, ledit circuit de classification délivrant des labels qui indiquent celle des classes à laquelle appartient chaque point au terme de la segmentation unimodale ;

(2) un sous-ensemble de mise à jour de ladite segmentation unimodale, comprenant en série :

(a) un circuit (514) de mise à jour dudit calcul de moyennes sur les T classes, recevant d'une part les signaux de sortie dudit circuit de classification et d'autre part les signaux associés aux M x N x (C-1) autres données correspondant aux (C-1) autres canaux ;

(b) un circuit (515) de mise à jour de ladite classification, délivrant des labels qui indiquent celle des classes à laquelle appartient chaque point dudit ensemble discret au terme de la segmentation initiale.

4. Dispositif de segmentation selon la revendication 3, caractérisé en ce que les paramètres "variance" sont donnés par l'expression :

$$V_{q,j}^2 = \Sigma_{(s/\ell(s) = q)} (x_{s,j} - M2_{q,j})^2/Nq$$

où j = 1 à C désigne l'indice du canal, $x_{s,j}$ ledit niveau de grandeur sur le canal j constaté en un site s déterminé, $\ell(s)$ le label attribué à ce site s, $M2_{q,j}$ les moyennes sur chaque canal j indépendamment, et Nq le nombre total de sites auxquels le label q est attribué.

5. Dispositif de segmentation selon la revendication 3, caractérisé en ce que les paramètres "variance" sont les éléments de la matrice des covariances sur les différents canaux, donnés par l'expression suivante :

$$V_{q,j1,j2} = \Sigma_{(s/\ell(s) = q)} (x_{s,j1} - M2_{q,j1}) (x_{s,j1} - M2_{q,j2})/Nq$$

où j1,j2 désignent les indices des deux canaux concernés, $X_{s,j}$ ledit niveau de grandeur sur le canal j constaté en un site s déterminé, $\ell(x)$ le label attribué à ce site s, $M2_{q,j}$ les moyennes sur chaque canal j considéré indépendamment, et Nq le nombre total de sites auxquels le label q est attribué.

6. Dispositif de segmentation selon l'une des revendications 4 et 5, caractérisé en ce que la sortie du sous-ensemble de mise à jour de la segmentation unimodale est renvoyée vers son entrée pour réalisation d'une nouvelle classification, jusqu'à interruption de ce processus itératif selon un critère de convergence déterminé.

7. Dispositif de segmentation selon l'une des revendications 1 à 6, caractérisé en ce que le sous-ensemble d'étiquetage comprend en série :

(1) une mémoire des probabilités conditionnelles délivrées par lesdites première et deuxième voies et de probabilités intermédiaires déterminées de façon interne audit sous-ensemble d'étiquetage ;
(2) un circuit de calcul de grandeurs égales ou proportionnelles aux probabilités marginales de chaque label pour chaque site, ledit calcul étant conduit selon les étapes suivantes, pour tous les q, a, b, c possibles :

(a) on définit $F_{m,n}(q)$ comme la probabilité conditionnelle $p(q/X_{mn})$ d'avoir au site (m,n) un label q, la référence $X_{mn}$ désignant l'ensemble des sites situés au-dessus et à gauche du site (m,n) ;
(b) pour chaque b, on examine la valeur $F=F_{m-1,n-1}(b)$ pour ne la prendre en compte que si elle est supérieure à un seuil déterminé ;
(c) on calcule alors l'expression :

$$H = Y_{m-1,n}(a,b).Z_{m,n-1}(c,b).p(q/a,b,c).p_q(x_{mn})/F$$

où : $Y_{m-1,n}(a,b) = p(a,b/X_{m-1,n})$
et : $Z_{m,n-1}(c,b) = p(c,b/X_{m,n-1})$
et l'on effectue une addition cumulée des valeurs de H, pour obtenir une grandeur J et une grandeur $L_{m-1,n-1}(b)$ ;
(d) on reprend les étapes (b) et (c) jusqu'à ce que tous les sites aient été traités de façon similaire, la valeur cumulée de J étant ajoutée à $Y_{m,n}(q,c)$ et à $Z_{m,n}(q,a)$ puis remise à zéro, et la valeur cumulée de $L_{m-1,n-1}(b)$ constituant ladite grandeur égale ou proportionnelle à la probabilité marginale du label b au site (m-1,n-1) ;
(e) on reprend les étapes (b) à (d) jusqu'à ce que toutes les combinaisons (q,a,c) aient été traitées de façon similaire ;

(3) un circuit d'étiquetage des sites, par comparaison des valeurs de $L_{m-1,n-1}(b)$ et attribution à chaque site (m-1,n-1) du label b correspondant à la valeur de $L_{m-1,n-1}(b)$ la plus grande.

8. Dispositif de segmentation selon la revendication 7, caractérisé en ce que, dans le circuit de calcul de grandeurs égales ou proportionnelles aux probabilités marginales de chaque label pour chaque site, il est prévu dans l'étape (c) une étape $(c_2)$ supplémentaire de normalisation par division de toutes les valeurs de Y et de Z par une norme $N_{m,n}$ égale, pour tous les b, à $\Sigma_b L_{m-1,n-1}(b)$.

**Claims**

1. A device for segmenting a discrete assembly of data corresponding to sites (m,n), with m being between 1 and M inclusive and n being between 1 and N inclusive, based on digital input signals corresponding to said data, characterized in that it comprises, in series:

(A) a sub-assembly (100) for initial segmentation by extracting the histogram, computing the average values from T classes and classification by searching, for each digital input signal, that average value which is most approximate to the level of said signal;
(B) a sub-assembly (200) for determining and updating probabilities, receiving the labels determined by said initial segmentation sub-assembly, and said digital input signals, and comprising:

(1) at the output of said initial segmentation sub-assembly, a first path (201) for determining conditional probabilities p(q/a,b,c), comprising in series:

(a) a circuit (211) for determining configuration probabilities interpreting the identity or non-identity of the levels corresponding to each of the fifteen possible configurations within a bidimensional square model (q,a,b,c) of a Markov chain, q being referred to in said segmentation assembly as the label to be determined at the "infant" site and a, b, c being referred to as the labels of the "parent" sites;
(b) a circuit (212) for computing propagation coefficients for the Markov chain model thus chosen;
(c) a first circuit (213) for determining conditional probability p(q/abc) = exp L(q/abc)/Z(abc) , in which Z is a normalization factor and in which L(q/abc) is a factor propagating the influence from the parents to the infants, defined by the expressions (3) to (14):

$$L(q/abc) = B(v).d(qa) + B(d). d(qb). + B(h). d(qc) + B(v,d). d(qab) + B(d,h). d(qbc)$$
$$+ B(v,h). d(qac) + B(v,d,h). d(qabc) \qquad (3)$$

$$\exp B(v) = k.S(1123) \qquad (4)$$

$$\exp B(d) = k.S(1213) \qquad (5)$$

$$\exp B(h) = k.S(1231) \qquad (6)$$

$$\exp B(v,d) = c(v,d).(\exp.B(h) + T\text{-}2).\exp (B(v) + B(d)) \qquad (7)$$

$$\exp B(v,h) = c(v,h).(\exp.B(d) + T\text{-}2).\exp (B(v) + B(h)) \qquad (8)$$

$$\exp B(d,h) = c(d,h).(\exp B(v) + T\text{-}2).\exp (B(d) + B(h)) \qquad (9)$$

$$\exp B(v,d,h) = \frac{(T\text{-}1).S(1111)/S(1222)}{\exp(B(v)+B(d)+B(h)+B(v,d)+B(v,h)+B(d,h))} \qquad (10)$$

$$c(v,d) = S(1112)/(S(1221) + S(1223)) \qquad (11)$$

$$c(v,h) = S(1121)/(S(1212) + S(1232)) \qquad (12)$$

$$c(d,h) = S(1211)/(S(1122) + S(1233)) \qquad (13)$$

$$k = (T\text{-}3)/S(1234); \qquad (14)$$

(2) also at the output of the initial segmentation sub-assembly (100) and in parallel with the first path (201), a second path (202) for determining conditional probabilities $P_q(x_{mn})$, comprising in series:

(a) a circuit (221) for computing "average" parameters and "variance" parameters of said T classes,
(b) a second circuit (222) for determining conditional probabilities;

(C) at the output of said sub-assembly (200) for determining and updating probabilities, a sub-assembly (300) for labelling pixels of said assembly of data, receiving the output signals of said first and second paths at first and second inputs and the digital input signals of the device at a third input, said circuit being provided to supply a new set of labels which constitutes the update of said initial segmentation;
(D) between the two sub-assemblies (100, 200) for initial segmentation and determining and updating probabilities, a sequencing sub-assembly (400) whose first and second inputs receive the set of initial labels obtained in accordance with said initial segmentation and the set of labels resulting from the update, respectively, and comprising in series:

(1) a circuit (410) for comparing said sets of labels;
(2) in accordance with the result of said comparison, a circuit (420) for discontinuing the process of segmentation or, in contrast, for a new update, for substituting said updated set of labels for said initial set of labels, said updated set of labels being applied to the input of said first and second paths.

2. A segmentation device as claimed in claim 1, characterized in that said discrete assembly comprises unimodal data, and in that the initial segmentation sub-assembly (100) receiving said input signals comprises in series:

(1) a circuit (11) for extracting the histogram of levels having a value expressed by these input signals and corresponding to each point of said assembly;
(2) based on said histogram, a circuit (12) for computing the average values from T classes corresponding to T previously selected characteristics of said discrete assembly, the predetermined number T being supplied to said computation circuit;

(3) a circuit (13) for classifying by searching, for all the points of said discrete assembly, that average value of the T computed average values which is most approximate to the level of each signal and corresponding regrouping of said points, said classification circuit supplying labels which indicate that class to which each point belongs in accordance with said initial segmentation.

3. A segmentation device as claimed in claim 1, characterized in that said discrete assembly comprises multimodal data for which the digital input signals corresponding to said data are regrouped in C channels, and in that said initial segmentation sub-assembly (510) receiving said input signals comprises in series:

(1) a unimodal segmentation stage (101) receiving, among said input signals, the signals associated with M x N data which correspond to one of the C channels, and comprising in series:

(a) a circuit (11) for extracting the histogram of levels having a value expressed by these input signals and corresponding to each point of said assembly;
(b) based on said histogram, a circuit (12) for computing the average values from T classes corresponding to T previously selected characteristics of said discrete assembly, the predetermined number T being supplied to said computation circuit;
(c) a circuit (13) for classifying by searching, for all the points of said discrete assembly, that average value of the T computed average values which is most approximate to the level of each signal associated with the data corresponding to each point and subsequently by corresponding regrouping of said points, said classification circuit supplying labels which indicate that class to which each point belongs in accordance with the unimodal segmentation;

(2) a sub-assembly for updating said unimodal segmentation, comprising in series:

(a) a circuit (514) for updating said computation of average values from the T classes, receiving the output signals from said classification circuit and the signals associated with the M x N x (C-1) other data corresponding to the (C-1) other channels;
(b) a circuit (515) for updating said classification, supplying labels which indicate that class to which each point of said discrete assembly belongs in accordance with the initial segmentation.

4. A segmentation device as claimed in claim 3, characterized in that the "variance" parameters are defined by the expression:

$$V_{q,l}^2 = 1 \; \Sigma_{(s/6(s) = q)} \; (x_{s,j} - M2_{q,j})^2 / Nq$$

in which j = 1 to C is the channel index, $x_{s,j}$ is said level of the value for the channel j at a given site s, 6(s) is the label attributed to this site s, $M2_{q,j}$ is the average of each channel j independently, and Nq is the total number of sites to which the label q is attributed.

5. A segmentation device as claimed in claim 3, characterized in that the "variance" parameters are the elements of the matrix of co-variances for the different channels, defined by the following expression:

$$V_{q,j1,j2} = 2 \; \Sigma_{(s/6(s) = q)} \; (x_{s,j1} - M2_{q,j1})(x_{s,j1} - M2_{q,j2}) / Nq$$

in which j1,j2 denotes the indices of the two channels concerned, $x_{s,j}$ is said level of the value for the channel j at a given site s, 6(x) is the label attributed to this site s, $M2_{q,j}$ is the average of each channel j considered independently, and Nq is the total number of sites to which the label q is attributed.

6. A segmentation device as claimed in any one of claims 4 and 5, characterized in that the output signal of the sub-assembly for updating the unimodal segmentation is applied to its input so as to realise a new classification, until this iterative process is interrupted in accordance with a given convergence criterion.

7. A segmentation device as claimed in any one of claims 1 to 6, characterized in that the labelling sub-assembly comprises in series:

(1) a memory for conditional probabilities supplied by said first and second paths and intermediate probabilities determined internally to said labelling sub-assembly;

(2) a circuit for computing values which are equal or proportional to the marginal probabilities of each label for each site, said computation being performed in accordance with the following steps, for all the possible q, a, b, c:

(a) $F_{m,n}(q)$ is defined as the conditional probability $p(q/X_{mn})$ of having a label q at the site (m,n), the reference $X_{mn}$ designating the assembly of sites situated above and at the left of the site (m,n);
(b) for each b, the value $F = F_{m-1, n-1}(b)$ is examined only for taking into account whether it is higher than a given threshold;
(c) then the following expression is computed:

$$H = Y_{m-1, n}(a,b).Z_{m,n-1}(c,b).p(q/a,b,c).p_q(x_{mn})F$$

in which: $Y_{m-1, n}(a,b) = p(a,b/X_{m-1, n})$
and: $Z_{m,n-1}(c,b) = p(c,b/X_{m,n-1})$
and an accumulated addition of the values of H is effected for obtaining a value J and a value $L_{m-1,n-1}(b)$;
(d) the steps (b) and (c) are repeated until all the sites have been treated in a similar manner, the cumulated value of J being added to $Y_{m,n}(q,c)$ and to $Z_{m,n}(q,a)$ and subsequently reset to zero, and the cumulated value of $L_{m-1,n-1}(b)$ constituting said value which is equal or proportional to the marginal probability of the label b at the site (m-1,n-1);
(e) the steps (b) to (d) are repeated until all the combinations (q,a,c) have been treated in a similar manner;

(3) a circuit for labelling sites by comparing the values of $L_{m-1,n-1}(b)$ and attributing to each site (m-1,n-1) the label b corresponding to the largest value of $L_{m-1,n-1}(b)$.

**8.** A segmentation device as claimed in claim 7, characterized in that in the circuit for computing values which are equal or proportional to the marginal probabilities of each label for each site, step (c) includes a supplementary normalization step $(c_2)$ by dividing all the values of Y and Z by a norm $N_{m,n}$ which for all the labels b is equal to $;_b L_{m-1,n-1}(b)$.

**Patentansprüche**

**1.** Anordnung zur Segmentierung eines diskreten Datensatzes, Stellen (m,n) entsprechend, mit m zwischen 1 und M enthalten und n zwischen 1 und N einschließlich, ausgehend von numerischen Eingangssignalen, den besagten Daten entsprechend dadurch gekennzeichnet, daß es in Serie enthält:

(A) Ein Unter-Ensemble (100) zur initialen Segmentierung durch Histogrammauszug, Berechnung der Durchschnitte über T Klassen und Klassifizierung über die Suche (1) für jedes numerische Eingangssignal des Durchschnitts, der dem Rang des besagten Signals am ehesten entspricht;
(B) ein Unter-Ensemble (200) zur Bestimmung und Aktualisierung der Wahrscheinlichkeiten, das einerseits die Labels (2) erhält, die von dem besagten Unter-Ensemble zur initialen Segmentierung bestimmt wurden und andererseits die besagten digitalen Eingangssignale, und das selbst enthält:

(1) Am Ausgang des besagten Unter-Ensembles zur initialen Segmentierung einen ersten Weg (201) zur Bestimmung der bedingten Wahrscheinlichkeiten p(q/a,b,c), der selbst wiederum in Serie enthält:

(a) Eine Schaltung (211) zur Bestimmung der sogenannten Konfigurations-Wahrscheinlichkeiten als Ausdruck der Identität oder Nicht-Identität der Ränge entsprechend jedem der fünfzehn möglichen Konfigurationen im Innern eines zweidimensionalen Modells im Quadrat (q,a,b,c) der Markow-Kette, wobei q in dem besagten zu segmentierenden Ensemble das an der sogenannten "Kind"-Stelle zu bestimmende Label, und a,b,c die Labels der besagten "Eltern"-Stellen benennen;
(b) eine Schaltung (212) zur Berechnung der Propagationskoeffizienten für das so gewählte Modell der Markow-Kette;
(c) eine erste Schaltung (213) zur Bestimmung der bedingten Wahrscheinlichkeit p(q/abc) = exp L(q/abc)Z(abc) , wobei Z ein Normalisierungsfaktor und wobei L(q/abc) ein sogenannter Propagationsoperator des Einflusses der Eltern auf die Kinder ist, definiert über die Ausdrücke (3) bis (14):

...

$$L(q/a,b,c) = B(v).\ d(q,a) + B(d).\ d(q,b). + B(h).\ d(q,c) + B(v,d).\ d(q,a,b) + B(d,h).\ d(q,b,c)$$
$$+ B(v,h).\ d(q,a,c) + B(v,d,h).\ d(q,a,b,c) \tag{3}$$

$$\exp B(v) = k.S(1123) \tag{4}$$

$$\exp B(d) = k.S(1213) \tag{5}$$

$$\exp B(h) = k.S(1231) \tag{6}$$

$$\exp B(v,d) = c(v,d).(\exp.B(h) + T\text{-}2).\exp (B(v) + B(d)) \tag{7}$$

$$\exp B(v,h) = c(v,h).\exp.B(d) + T\text{-}2).\exp (B(v) + B(h)) \tag{8}$$

$$\exp B(d,h) = c(d,h).(\exp.B(v) + T\text{-}2).\exp (B(d) + B(h)) \tag{9}$$

$$\exp B(v,d,h) = \frac{(T\text{-}1.S(1111)/S(1222)}{\exp(B(v)+B(d)+B(h)+B(v,d)+B(v,h)+B(d,h))} \tag{10}$$

$$C(v,d) = S(1112)/(S(1221) + S(1223)) \tag{11}$$

$$C(v,h) = S(1121)/(S(1212) + S(1232)) \tag{12}$$

$$C(d,h) = S(1211)/(S(1122) + S(1233)) \tag{13}$$

$$k = (T\text{-}3)/S(1234) \tag{14}$$

(2) Ebenfalls am Ausgang des Unter-Ensembles (100) zur initialen Segmentierung und parallel zum ersten Weg (201), einen zweiten Weg (202) zur Bestimmung der bedingten Wahrscheinlichkeiten $p_q(x_{mn})$, der selbst wiederum in Serie enthält:

(a) Eine Schaltung (221) zur Berechnung der "Durchschnitts"-Parameter und der "Varianz"-Parameter der besagten T Klassen;
(b) eine zweite Schaltung (222) zur Bestimmung der bedingten Wahrscheinlichkeiten;

(C) am Ausgang des besagten Unter-Ensembles (200) zur Bestimmung und Aktualisierung der Wahrscheinlichkeiten, ein Unter-Ensemble (300) zur Etikettierung der Punkte des besagten Daten-Ensembles, das an einem ersten und zweiten Eingang die Ausgangssignale des besagten ersten und zweiten Wegs und an einem dritten Eingang die besagten numerischen Eingangssignale der Anordnung erhält, wobei die Schaltung vorgesehen ist, um einen neuen Labelsatz abzugeben, der die Aktualisierung der besagten initialen Segmentierung bildet;
(D) Zwischen den beiden Unter-Ensembles (100, 200) zur initialen Segmentierung und der Bestimmung und Aktualisierung von Wahrscheinlichkeiten, ein Unter-Ensemble (400) zur Sequenzierung, das respektive an einem ersten und zweiten Eingang den initialen Labelsatz erhält, der am Ende der besagten initialen Segmentierung erhalten wurde, und den Labelsatz, der aus der Aktualisierung hervorgeht, und das in Serie enthält:

(1) Eine Vergleichsschaltung (410) der besagten Labelsätze;
(2) je nach dem Ergebnis des besagten Vergleichs, eine Schaltung (420) zum Anhalten des Segmentierverfahrens oder, im Gegensatz, für eine neue Aktualisierung, zum Ersetzen des initialen Labelsatz durch den besagten aktualisierten Labelsatz, wobei der aktualisierte Labelsatz zum Eingang des besagten ersten und zweiten Wegs geleitet wird.

2. Anordnung zur Segmentierung nach Anspruch 1, dadurch gekennzeichnet daß das besagte diskrete Ensemble unimodale Daten enthält, und dadurch, daß das Unter-Ensemble (100) zur initialen Segmentierung, das die besagten Eingangssignale erhält, in Serie enthält:

(1) Eine Schaltung (11) für den Histogrammauszug der von diesen Eingangssignalen formulierten Größenordnung, die respektive jedem Punkt des besagten Ensembles entsprechen;

(2) eine Schaltung (12) zur Berechnung, ausgehend von dem besagten Histogramm, der Durchschnitte über T Klassen entsprechend T Charakteristiken des besagten zuvor ausgewählten diskreten Ensembles, wobei die besagte zuvor bestimmte Zahl T der besagten Rechenschaltung zugeführt wird;

(3) eine Schaltung (13) zur Klassifizierung, durch die Suche für alle Punkte des besagten diskreten Ensembles, des der T berechneten Durchschnitte, der dem Rang jedes Signals am ehesten entspricht, und zur entsprechenden Gruppierung der besagten Punkte, wobei die Klassifizierschaltung Labels zur Anzeige der Klassen abgibt, der jeder Punkt am Ende der besagten initialen Segmentierung zugehört.

3. Anordnung zur Segmentierung nach Anspruch 1, dadurch gekennzeichnet daß das besagte diskrete Ensemble mulitmodale Daten enthält, für die die numerischen Eingangssignale, die den besagten Daten entsprechen, in C Kanäle gruppiert werden, und dadurch, daß das besagte Unter-Ensemble (510) zur initialen Segmentierung, das die besagten Eingangsdaten erhält, in Serie enthält:

(1) Eine Stufe (101) zur unimodalen Segmentierung, die unter den besagten Eingangssignalen die Signale erhält, die mit den M x N Daten verknüpft sind, die einem der C Kanäle entsprechen, und die in Serie enthält:

(a) Eine Schaltung (11) für den Histogrammauszug der von diesen Eingangssignalen formulierten Größenordnung, die respektive jedem Punkt des besagten Ensembles entsprechen;

(b) eine Schaltung (12) zur Berechnung, ausgehend von dem besagten Histogramm, der Durchschnitte über T Klassen entsprechend T Charakteristiken des besagten zuvor ausgewählten diskreten Ensembles, wobei die besagte zuvor bestimmte Anzahl T der besagten Rechenschaltung zugeführt wird;

(c) eine Schaltung (13) zur Klassifizierung, durch die Suche für alle Punkte des besagten diskreten Ensembles, des der T berechneten Durchschnitte, der dem Rang jedes Signals, verknüpft mit dem Datenwert jedes Punktes, am ehesten entspricht, und dann zur entsprechenden Gruppierung der besagten Punkte, wobei die Klassifizierschaltung Labels zur Anzeige der Klassen abgibt, der jeder Punkt am Ende der besagten initialen Segmentierung zugehört;

(2) ein Unter-Ensemble zur Aktualisierung der besagten unimodalen Segmentierung, das in Serie enthält:

(a) eine Schaltung (514) zur Aktualisierung der besagten Berechnung der Durchschnitte über die T Klassen, die einerseits die Ausgangssignale der besagten Klassifizierschaltung und andererseits die Signale erhält, die mit den M x N x (C-1) anderen Daten verknüpft sind, die den (C-1) anderen Kanälen entsprechen;

(b) eine Schaltung (515) zur Aktualisierung der besagten Klassifizierung, die Labels zur Anzeige der Klassen abgibt, der jeder Punkt des besagten diskreten Ensembles am Ende der besagten initialen Segmentierung zugehört.

4. Anordnung zur Segmentierung nach Anspruch 3, dadurch gekennzeichnet daß die "Varianz"-Parameter mit folgendem Ausdruck gegeben werden:

$$V^2_{q,j} = \Sigma_{(s/\ell(s)=q)} (x_{s,j} - M2_{q,j})^2/Nq$$

wobei j = 1 bis C den Kanalindex, $x_{s,j}$ die besagte Rangordnung über den Kanal j, an einer bestimmten Stelle s festgestellt, $\ell(s)$ das dieser Stelle s zugeteilte Label, $M2_{q,p}$ die Durchschnitte über jeden Kanal j, unabhängig, und Nq die Gesamtzahl Stellen bezeichnet, denen das Label q zugeteilt ist.

5. Anordnung zur Segmentierung nach Anspruch 3, dadurch gekennzeichnet daß die "Varianz"-Parameter die Elemente der Matrix der Kovarianzen über die verschiedenen Kanäle sind, durch folgenden Ausdruck gegeben:

$$V_{qj1,j2} = \Sigma_{(s/\ell(s)=q)} (x_{s,j1} - M2_{q,j1}) (x_{s,j1} - M2_{q,j2})/Nq$$

wobei j1,j2 die Indizes der beiden betroffenen Kanäle, $x_{s,j}$ die besagte Rangordnung über den Kanal j, an einer bestimmten Stelle s festgestellt, $\ell(x)$ das dieser Stelle s zugeteilte Label, $M2_{q,j}$ die Durchschnitte über jeden Kanal j, unabhängig betrachtet, und Nq die Gesamtzahl Stellen bezeichnet, denen das Label q zugeteilt ist.

6. Anordnung zur Segmentierung nach einem der Ansprüche 4 oder 5, dadurch gekennzeichnet daß der Ausgangs des Unter-Ensembles zur Aktualisierung der unimodalen Segmentierung zu seinem Eingang zurückgeleitet wird, um eine neue Klassifizierung vorzunehmen, bis zur Unterbrechung dieses iterativen Vorgangs nach einem bestimmten Konvergenzkriterium.

7. Anordnung zur Segmentierung nach einem der Ansprüche 1 bis 6, dadurch gekennzeichnet, daß das Unter-Ensemble zur Etikettierung in Serie enthält:

(1) Einen Speicher der bedingten Wahrscheinlichkeiten, vom besagten ersten und zweiten Weg abgegeben, und der bestimmten Zwischenwahrscheinlichkeiten, intern zum besagten Unter-Ensemble zur Etikettierung bestimmt;

(2) eine Schaltung zur Berechnung gleicher oder proportionaler Größen zu den marginalen Wahrscheinlichkeiten jedes Labels für jede Stelle, wobei die besagte Berechnung in folgenden Schritten vorgenommen wird, für alle möglichen q, a, b, c:

(a) Man definiert $F_{m.q}$ als die bedingte Wahrscheinlichkeit, $p(q/X_{mn})$ an der Stelle $(m,n)$ ein Label q zu haben, wobei der Verweis $X_{mn}$ alle über und links der Stelle $(m,n)$ gelegenen Stellen bezeichnet;

(b) für jedes b prüft man den Wert $F = F_{m-1,n-1}(b)$, um es nur zu berücksichtigen, wenn es über einer bestimmten Schwelle liegt;

(c) man berechnet dann den Ausdruck:

$$H = Y_{m-1.n}(a,b).Z_{m.n-1}(c,b).p(q/a,b,c).pq(x_{mn})/F$$

wobei: $X_{m-1.n}(a,b) = p(a,b/X_{m-1.n})$

und: $Z_{m.n-1}(c,b) = p(c,b/X_{m.1-n})$

und man führt eine mit den Werten H summierte Addition durch, um eine Größe J und eine Größe $L_{m-1.n-1}(b)$ zu erhalten;

(d) man wiederholt die Schritte (b) und (c), bis alle Stellen auf ähnliche Art verarbeitet wurden, wobei der summierte Wert J zu $Y_{m.n}(q,c)$ und zu $Z_{m.n}(q,a)$ hinzugefügt und dann auf Null zurückgestellt wird, und wobei der summierte Wert $L_{m-1.n-1}(b)$ die besagte gleiche oder proportionale Größe zur marginalen Wahrscheinlichkeit des Labels b an der Stelle $(m-1,n-1)$ bildet;

(e) man wiederholt die Schritte (b) bis (d), bis alle Kombinationen $(q,a,c)$ auf ähnliche Art verarbeitet wurden;

(3) eine Schaltung zur Etikettierung der Stellen, durch den Vergleich der Werte $L_{m-1,n-1}(b)$ und die Zuteilung an jede Stelle $(m-1,n-1)$ des Labels b, das dem größten Wert $(L_{m-1,n-1}(b)$ entspricht.

8. Anordnung zur Segmentierung nach Anspruch 7, dadurch gekennzeichnet, daß in der Schaltung zur Berechnung von gleichen oder proportionalen Größen zu den marginalen Wahrscheinlichkeiten jedes Labels für jede Stelle im Schritt (c) ein zusätzlicher Schritt (c2) zur Normalisierung durch Teilung aller Werte von Y und von Z durch eine Norm $N_{m.n}$, gleich für alle b, $\Sigma_b L_{m-1,n-1}(b)$, vorgesehen ist.

FIG. 1

FIG. 2

FIG. 3

FIG. 4